# EUROPÄISCHE PATENTANMELDUNG

(11) **EP 2 159 169 A1**
(43) Veröffentlichungstag der Anmeldung: **03.03.2010**
(21) Anmeldenummer: 08015032.9
(22) Anmeldetag: 26.08.2008
(51) Int. Cl.: B65G 1/02, B65G 13/11

(54) **Rollenbahnsystem für Regale und Rutschregale**

(71) Anmelder: Nilsson, Rickard, 65558 Balduinstein (DE)
(72) Erfinder: Nilsson, Rickard, 65558 Balduinstein (DE)
(74) Vertreter: Preis, Tobias

(57) **Zusammenfassung**

Die Rollenbahnen bestehen aus U-förmigen Schienen aus Metall mit an den außen liegenden Flanken gegenüberliegenden Einkerbungen, in welche die Stifte der Rollen eingefügt werden, wobei die Schienen mit einem Keil zwischen den Einkerbungen so bearbeitet werden, dass durch die keilförmige Verformung die Rollen in der U-förmigen Schiene arretiert werden (Fig. 4).

## Beschreibung

Regale und Rutschregale nach der First in First out - Methode weisen verschiedene System auf, um das Herabrutschen der Waren in den jeweiligen Warenschienen bzw. Warenbahnen zu gewährleisten. Neben Rutschbahnen für kleinere Produkte gibt es Rollenbahnen für größere und schwere Produkte, da diese auf den Rutschbahnen aufgrund des Eigengewichtes, der Beschaffenheit und ihres Materials nicht herab gleiten oder nur schwer herab gleiten. Rollenbahnen üblicher Bauweise bestehen oftmals aus schmalen Rollen, auf denen nur große und plan aufliegende Kartons herab gleiten können. Außerdem sind Rollenbahnen nach der bisher bekannten Bauart nicht in der Lage, z.B. Getränkekartons, die auf der Standfläche nach innen bäuchige Auswölbungen aufweisen, herab gleiten zu lassen. Wegen ihrer Form sind Getränkekartons grundsätzlich nur bedingt geeignet, auf Rollenbahnen herkömmlicher Bauart präsentiert zu werden, da diese entweder mit der konkaven Innenwölbung auf den Rollen aufsitzen oder mit den bäuchigen Auswölbungen an den Rollen hängen bleiben. Weiterhin sind übliche Rollenbahnen kompliziert im Aufbau und nicht kostengünstig herzustellen. Die Arretierung bzw. das Fixieren von Rollen in solchen Rollenbahnen wird bisher mit technisch und finanziell aufwändigen Systemen gelöst.

Der mit dem Patentanspruch angegebenen Erfindung liegt das Problem zugrunde, eine für sämtliche Waren funktionierende Rollenbahn zu schaffen, insbesondere für den Einsatz in Rutschregalen nach dem First in First out - System. Die Rollenbahnen sollen für sämtliche erdenklichen Stückwaren unter permanenter Gewährleistung des Herabrutschens in den Rutschregalen einsetzbar sein. Die Rollenbahnen sollen einfach und kostengünstig, aus so wenig wie möglichen Einzelteilen bestehen und aus hygienischen Gesichtspunkten einfach zu reinigen sein.

Diese Probleme werden mit den in dem Patentanspruch aufgeführten Merkmalen gelöst.

Mit der Erfindung wird erreicht, dass durch die Konstruktion und die verwendeten Materialien das Herabrutschen für sämtliche Stückwaren gewährleistet ist, die Rollenbahnen lediglich aus einer U-Schiene und den dazugehörigen Rollen besteht und durch das Hineintreiben der Keile in die U-förmige Schiene eine sichere Arretierung der Rollen in der Schiene gewährleistet ist. Der einfache Aufbau gewährleistet das einfache Reinigen.

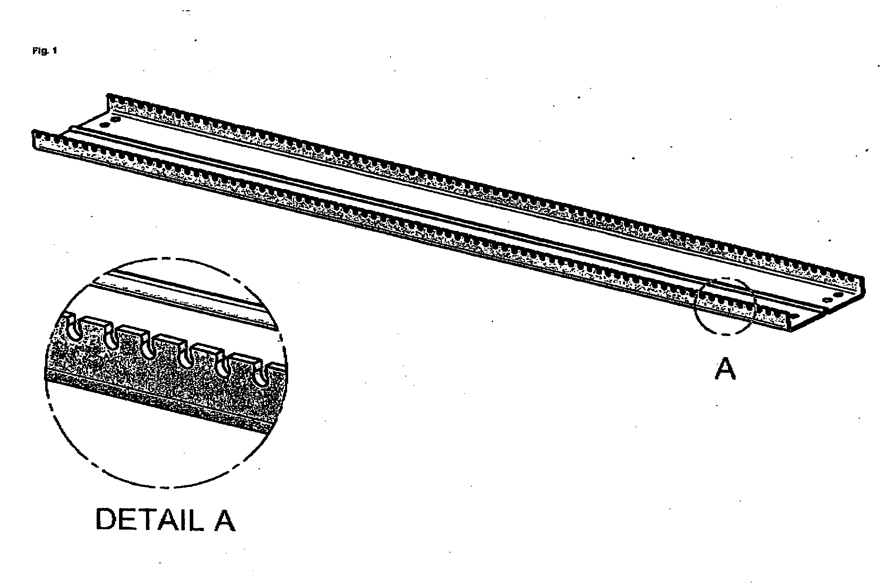

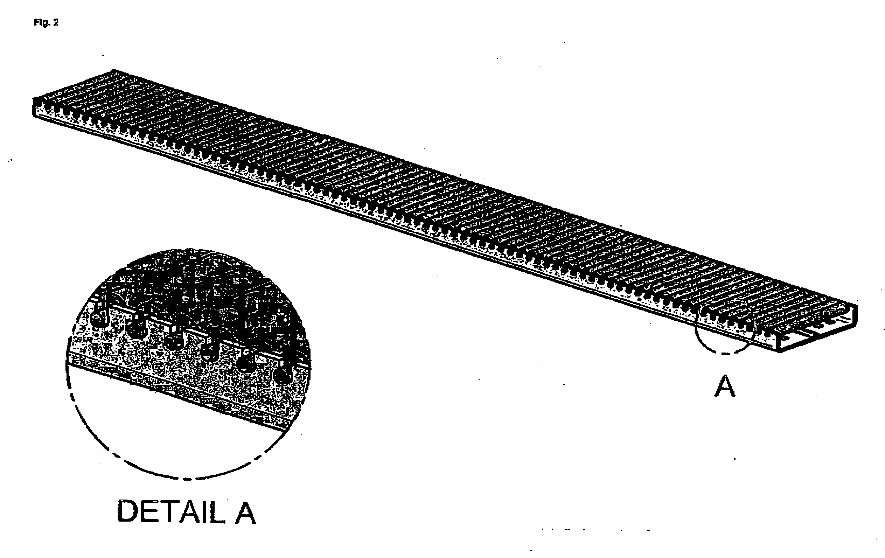

Die im Patentanspruch beschriebene Ausgestaltung der U-förmigen Schiene ermöglicht in den zunächst senkrecht ausgeformten Einkerbungen eine sichere Aufnahme der einzufügenden Rollen (Fig. 1). Die Rollen liegen nach Einfügen in den Einkerbungen in den kreisförmigen Ausformungen auf, wodurch ein möglichst reibungsarmes Drehen der Rollen in der Einkerbung ermöglicht wird (Fig. 2).

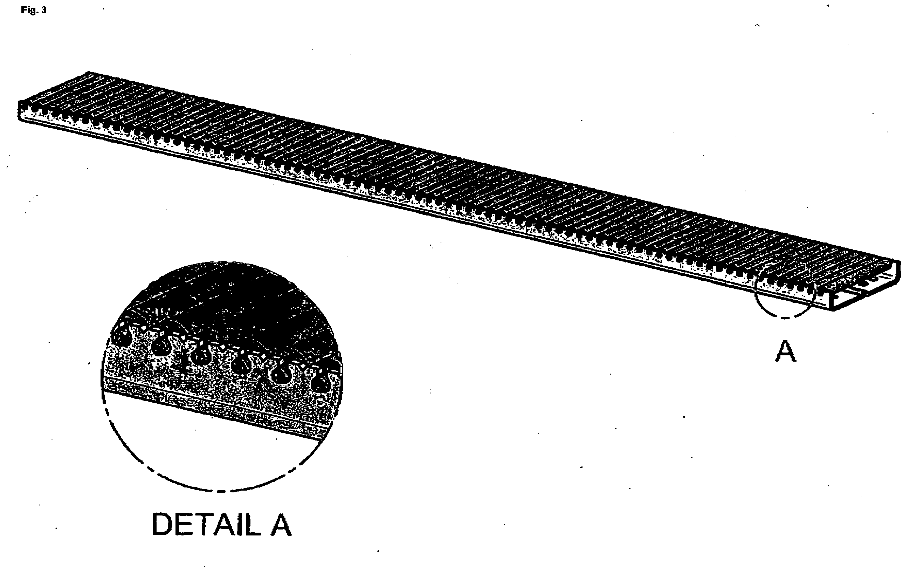

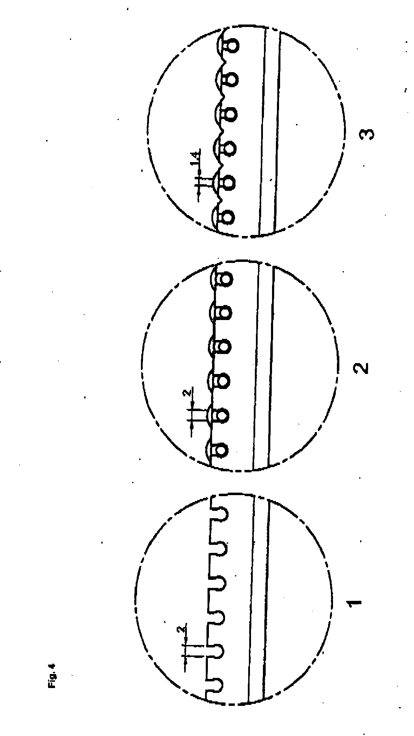

Die im Patentanspruch beschriebene mechanische Bearbeitung mit einem Keil zwischen den Einkerbungen der U-förmigen Schiene hat den Vorteil, dass sich das Material der U-förmigen Schiene sowohl in die Richtung der vor, als auch in die Richtung der hinter dem Keil liegenden Einkerbung verformt und so die senkrechte Einkerbung exakt in dem erforderlichen Maße verjüngt, sodass die Rollen in der U-förmigen Schiene auf Dauer arretiert bzw. fixiert werden ohne zusätzlichem Materialaufwand oder kompliziertem Bearbeitungsvorgang (Fig. 3, Fig. 4).

Ein Ausführungsbeispiel wird anhand der Figuren 1 bis 4 erläutert. Figur 1 zeigt die U-förmige Schiene einschließlich der senkrechten Einkerbungen, die in die kugelförmigen Ausformungen enden. Figur 2 zeigt die Rollenbahnen mit eingesetzten. Rollen, bevor die U-förmige Schiene zwischen den Einkerbungen bearbeitet ist. Figur 3 zeigt die Schiene nach dem Bearbeitungsvorgang, wobei zwischen den Einkerbungen die keilförmige Verformung zu erkennen ist. Figur 4 zeigt die Einkerbungen, die vor Bearbeitung eine bestimmte Öffnung aufweisen, die nach Einlegen der Rollen noch so vorhanden ist und nach der Bearbeitung mit der keilförmigen Ausformung auf das erforderliche Maß reduziert wird, sodass die Rollen mit ihren Stiften in der U-förmigen Schiene arretiert sind.

## Patentansprüche

1. Rollenbahnsystem für Regale und Rutschregale, bestehend aus Rollenbahnen, wobei eine Rollenbahn aus einer U - förmigen Schiene aus Metall mit offenen, an den außen liegende Flanken gegenüberliegende Einkerbungen, die von oben senkrecht nach unten in eine kreisförmige Ausformung enden, besteht (Fig. 1), die in den gegenüberliegenden Einkerbungen die Rollen mit den äußeren Stiften in den kreisförmigen Ausformungen aufnimmt (Fig. 2), wobei nach Einfügen der Rollen in die Einkerbungen die u-förmige Schiene jeweils zwischen allen Einkerbungen mit einem mechanischem Keil bearbeitet wird, so dass sich die Schiene zwischen den Einkerbungen durch den hineingetriebenen Keil sowohl in die Richtung der davor als auch der dahinter liegenden Einkerbung verformt und so durch die keilförmige Verformung die Rollen in den Einkerbungen der u-förmigen Schiene arretiert werden (Fig. 3, Fig. 4).
